# EUROPÄISCHE PATENTSCHRIFT

(11) **EP 0 787 218 B1**
(45) Veröffentlichungstag und Bekanntmachung des Hinweises auf die Patenterteilung: **13.01.1999**
(21) Anmeldenummer: 95934607.3
(22) Anmeldetag: 12.10.1995
(51) Int. Cl.: C23C 4/18, C23C 28/02, C25D 7/10, F16C 33/12

(54) **SCHICHTWERKSTOFF UND VERFAHREN ZU SEINER HERSTELLUNG**
LAMINATED MATERIAL AND PROCESS FOR PRODUCING THE SAME
MATERIAU STRATIFIE ET SON PROCEDE DE FABRICATION

(30) Priorität: 26.11.1994 DE 4442186
(43) Veröffentlichungstag der Anmeldung: 06.08.1997
(73) Patentinhaber: GLYCO-METALL-WERKE Glyco B.V. & Co. KG, 65201 Wiesbaden (DE)
(72) Erfinder: ANDLER, Gerd, 60594 Frankfurt (DE)
(86) Internationale Anmeldenummer: DE9501433
(87) Internationale Veröffentlichungsnummer: WO9617100

(56) Entgegenhaltungen:
- EP-A- 0 269 049
- WO-A-89/10422
- DE-A- 3 917 899
- DE-C- 906 530
- GB-A- 321 407
- GB-A- 2 177 027
- GB-A- 2 252 564
- US-A- 4 189 525
- PATENT ABSTRACTS OF JAPAN vol. 4 no. 42 (C-005) ,3.April 1980 & JP,A,55 014823 (TAIHO KOGYO) 1.Februar 1980,
- PATENT ABSTRACTS OF JAPAN vol. 8 no. 222 (C-246) ,9.Oktober 1984 & JP,A,59 104496 (SHIN NIPPON SEITETSU) 16.Juni 1984,
- PATENT ABSTRACTS OF JAPAN vol. 8 no. 122 (C-227) ,8.Juni 1984 & JP,A,59 035694 (MITSUBISHI DENKI) 27.Februar 1984,

## Beschreibung

Die Erfindung betrifft einen Schichtwerkstoff, für Gleitelemente in geschmierten tribologischen Systemen, mit einer metallischen Trägerschicht, insbesondere aus Stahl, und einer Funktionsschicht, aus AlSn, AlPb, CuPb, CuSn oder CuZn. Die Erfindung bezieht sich auch auf ein Verfahren zur Herstellung solcher Schichtwerkstoffe.

Aus der DE-OS 37 21 008 sind beispielsweise zu Gleitlagerelementen verarbeitbare Schichtwerkstoffe bekannt, die mittels Vakuum-Plasmaspritzen hergestellt werden. Solche Schichten zeichnen sich u.a. durch hohe Haftfestigkeiten zum Grundwerkstoff und durch sehr geringe Porengehalte aus. Durch reaktive Prozeßführung, d.h. Aufrechterhalten eines vorher festgelegten Sauerstoffpartialdruckes in dem Plasma können während des Vakuum-Plasmaspritzens die Oxidanteile, d.h. die Anteile der Al₂O₃-Partikel eingestellt werden. Die Gesamtmenge der Al₂O₃-Partikel konnte danach auf ca. 1 Vol.-% der Funktionsschicht begrenzt werden. Die Nachteile dieses Verfahrens liegen aber in dem hohen prozeßtechnischen Aufwand, wodurch es für Serienteile als kostenintensiv angesehen wird.

Werden die Gleitlagerschichten mittels Luft-Plasmaspritzen hergestellt, wie dies in der EP 0 364 547 beschrieben ist, so zeigen die daraus resultierenden Schichten einen verfahrensbedingten hohen Oxidgehalt. Diese Oxide wirken sich zwar positiv auf das Verschleißverhalten der Schichten aufgrund ihrer großen Härte aus, vermindern aber ihe Anpassungsfähigkeit an den Gegenläufer und verschlechtern ebenso das Einlaufverhalten. Ferner zeigen diese Schichten im geschmierten System erhöhte Korrosions- und Erosionsanfälligkeit. So kann es z.B. durch Eindringen von Öl unter erhöhtem Druck in die in Luftplasmagespritzten Schichten immer vorhandenen Poren zu einer erosiven Schädigung der Schicht durch Herauslösen ganzer Schichtteile kommen, wobei besonders in dünnen Schichten u.U. sogar der Trägerwerkstoff korrosiv geschädigt werden kann. Gerade die oberflächennah angeordneten Poren sind oftmals Ausgangspunkt dieser kavitativen oder erosiven Angriffe. Sind diese Poren noch untereinander verbunden, kann es durch korrosive Angriffe in diesen Porenbereichen ebenfalls zu Schichtausfällen und Versagen des Bauteils kommen.

In der EP-A-269 049 wird ein Verfahren zum Glätten einer Spritzschicht und eine geglättete Spritzschicht beschrieben. Insbesondere wird eine auf ein Grundmaterial, wie z.B. Eisen, Stahl aufgebrachte rauhe Plasmaspritzschicht mit einer Deckschicht aus einem einebnenden, gut auf der Spritzschicht haftenden Material, wie z.B. Metalle wie Ni, Sn, Zn, Pb, Cu etc. und deren Legierungen überzogen. Im Betrieb wird diese Deckschicht aus einebnendem, d.h. zwangsläufig gegenüber der gespritzten rauhen Verschleissschutzschicht weicherem Material allmählich abgetragen, sodass nur noch die Poren gefüllt sind. Diese Massnahme soll u.a. zu verringerten Reibwerten führen, ohne dass der Verschleissschutz beeinträchtigt oder die Spritzschicht in aufwendiger Weise bearbeitet werden muss.
Der Glättungsvorgang der Oberfläche der Spritzschicht soll somit nicht durch einen mechanischen Glättungsprozeß erfolgen, sondern nur durch die aufzubringende Deckschicht. Die ursprüngliche Rauhigkeit der Spritzschicht wird somit nicht verändert. Weil die Deckschicht keine Glättung einer rauhen Spritzschicht bewirkt, sondern nur die bereits geglättete Funktionsschicht unter Ausfüllung der Poren abdecken soll, so können nach dem Einlaufen nur noch die gefüllten Poren die Gleiteigenschaften verbessern. Für den gemäß EP-A-269 049 vorgesehenen Anwendungszweck, nämlich als Verschließschutz für Textilmaschinen, ist dies ausreichend.

Um die Korrosionsbeständigkeit von gespritzten Schichten zu verbessern, wird in der DE-OS 40 07 734 vorgeschlagen, nach dem Aufspritzen der Schicht einen zusätzlichen Einschmelzvorgang bei 870 - 1200°C durchzuführen. Hierdurch wird neben der Korrosions- auch die Verschleißbeständigkeit deutlich erhöht. Dieses Verfahren scheidet aber wegen des hohen Wärmeeintrags in den Grundwerkstoff, insbesondere bei dünnwandigen Bauteilen, aus.

Demgegenüber liegt der Erfindung die Aufgabe zugrunde, einen Schichtwerkstoffund ein Verfahren zu seiner Herstellung bereitzustellen, mit dem der eingangs angesprochene Schichtwerkstoff hinsichtlich Korrosionsbeständigkeit, Einlaufverhalten und Anpassungsfähigkeit deutlich verbessert werden soll.

Diese Aufgabe wird mit einem Schichtwerkstoff gemäß den Merkmalen des Patentanspruchs 1 gelöst. Das Verfahren ist Gegenstand des Patentanspruchs 7.

Der erfindungsgemäße Schichtwerkstoff weist eine aufgespritzte Funktionsschicht auf, die zuerst einer Oberflächenbearbeitung durch Drehen oder Schleifen unterzogen wird und anschließend darauf eine weichere Deckschicht chemisch oder elektrolytisch abgeschieden wird.

Die aufgespritzte Funktionsschicht wird durch diese weichere Deckschicht versiegelt, wodurch ein Schichtsystem entsteht, das sich als Folge der weichen Deckschicht durch gutes Einlauf- und Anpassungsverhalten auszeichnet. Nach der Beendigung der Einlaufphase kommen dann die guten Verschleißeigenschaften der aufgespritzten Funktionsschicht zum Tragen, die durch die harten Oxidanteile dieser Schicht bedingt sind.

Die Verbesserung hinsichtlich des Laufverhaltens von Gleitelementen, die aus einem solchen Schichtwerkstoff hergestellt sind, besteht darin, daß die bearbeitete Spritzschicht im oberflächennahen Bereich mit Poren behaftet ist und diese Poren beim Aufbringen der weicheren Deckschicht, insbesondere durch das Galvanisieren, mit weichen Lagerwerkstoffen überdeckt und teilweise auch aufgefüllt wird. Während der Einlaufphase wird dann die weiche Galvanikschicht, z.B. bestehend aus Weißmetall, größtenteils abgetragen, gleichzeitig aber in die Poren eingeschmiert, d.h. der oberflächennahe Bereich besitzt nach der Einlaufphase folgendes Aussehen: Auf einem Großteil der Lauffläche steht das härtere, gespritzte Lagermetall an, dazwischen befinden sich mit der weicheren Schicht aufgefüllte Poren, die als weiche Inseln in der härteren Matrix für hervorragende Gleiteigenschaften sorgen. Ein weiterer positiver Effekt der galvanischen oder chemisch abgeschiedenen Deckschicht ist darin zu sehen, daß durch die Versiegelung der Spritzschicht ihre Erosions- und Korrosionsbeständigkeit nachhaltig verbessert wird.

Vorzugsweise besteht die weichere Schicht aus PbSnCu oder SnSbCu-Legierungen. Vorzugsweise besteht die weichere Deckschicht aus 80 - 95 Gew.-% Pb, 4 - 15 Gew.-% Sn und 1 - 5 Gew.-% Cu, wobei eine bevorzugte Zusammensetzung 85 - 91 Gew.-% PB, 8 - 12 Gew.-% Sn und 1 - 3 Gew.-% Cu aufweist. Im Falle einer SnSbCu-Legierung liegt die bevorzugte Zusammensetzung bei 87 - 96 Gew.-% Sn, 3,5 - 10,5 Gew.-% Sb und 0,5 - 2,5 Gew.-% Cu. Eine weitere bevorzugte Zusammensetzung weist 90,5 - 94 Gew.-% Sn, 5,5 - 8,5 Gew.-% Sb und 0,5 - 1 Gew.-% Cu auf.

Zwischen der Spritzschicht und der Deckschicht kann eine haftungsvermittelnde Zwischenschicht aus Nickel, Kupfer oder Nickel-Zinn aufgebracht sein, deren Dicke vorzugsweise 1 - 2 µm beträgt. Durch diese Zwischenschicht werden die Poren nicht ausgefüllt und die Struktur der Poren bleibt im wesentlichen erhalten.

Gemäß einer bevorzugten Ausführungsform besitzt die aufgespritzte Funktionsschicht einen Oxidanteil von 5 - 10 Vol.-% und einen Porenanteil 2 - 5 Vol.-% auf.

Das Verfahren zur Herstellung solcher Schichtwerkstoffe sieht vor, daß auf die mittels an Luft durchgeführten Spritzverfahren aufgebrachte Funktionsschicht eine weichere Deckschicht mittels chemischer oder elektrolytischer Abscheidung aufgebracht wird. Als Spritzverfahren für die Funktionsschicht eignen sich das Luft-Plasmaspritzen, Lichtbogenspritzen und das Flammspritzen.

Es ist auch möglich, gemäß einer weiteren Ausführungsform zwischen der aufgespritzten Lagermetallschicht und der chemisch oder elektrolytisch abgeschiedenen Deckschicht eine haftvermittelnde Zwischenschicht aufzubringen, die vorzugsweise aus Nickel, Kupfer oder Nickel-Zinn bestehen kann. Die Dicke der Zwischenschicht beträgt vorzugsweise 1 - 2 µm.

Beispielhafte Ausführungsformen der Erfindung werden nachfolgend anhand der Zeichnungen näher erläutert.

Es zeigen:
- Figur 1: einen Schnitt durch einen unbehandelten, noch keine Deckschicht aufweisenden Schichtwerkstoff,
- Figur 2: den in Figur 1 gezeigten Schichtwerkstoff nach einer Oberflächenbearbeitung und
- Figur 3: den erfindungsgemäßen Werkstoff, der mit einer galvanisch aufgebrachten Deckschicht versehen ist.

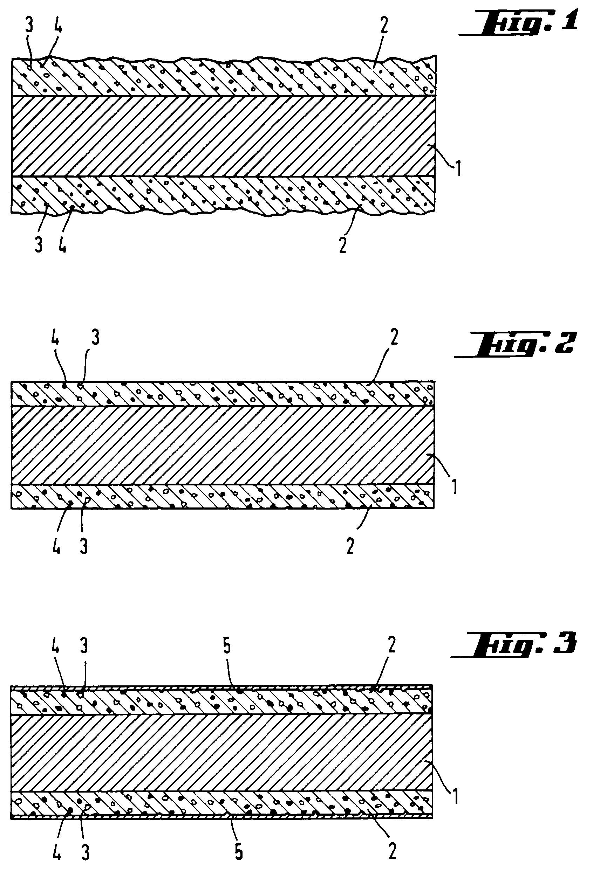

In der Figur 1 ist ein Schichtwerkstoff dargestellt, bei dem auf einem Trägermaterial 1, beispielsweise aus Stahl C 22, mittels Luft-Plasmaspritzen beidseitig eine Bronze (CuSn₁₀ in einer Stärke von 0,3 - 0,4 mm) aufgebracht ist. Diese Schicht bildet die Spritzschicht 2, in der Poren 3 und Oxidteilchen 4 zu sehen sind. Vor dem Aufspritzen der Spritzschicht wurden die für Plasmaspritzen bekannten Vorbehandlungsverfahren, wie Entfetten und Aufrauhen der Oberfläche durch Sandstrahlen angewendet. Anschließend erfolgt eine Bearbeitung der Spritzschicht 2 (s. Figur 2) durch Drehen, wobei eine Schichtdicke von 200 - 250µm mit einer Rauhigkeit von R_{z} gleich 8 - 12 µm eingestellt wird.

Im Anschluß daran wird die Spritzschicht 2 in einem weiteren Schritt mit der bereits beschriebenen Deckschicht 5 aus PbSnCu durch ein galvanisches Verfahren in einer Stärke von 20 - 30 µm versehen.

### Bezugszeichen:

- 1: Trägermaterial
- 2: Spritzschicht
- 3: Pore
- 4: Oxidteilchen
- 5: Deckschicht

## Patentansprüche

1. Schichtwerkstoff für Gleitelemente in geschmierten tribologischen Systemen, mit einer metallischen Trägerschicht, insbesondere aus Stahl, und einer Funktionsschicht aus AlSn, AlPb, CuPb, CuSn oder CuZn, die mittels eines an Luft durchgeführten Spritzverfahrens aufgebracht ist, dadurch gekennzeichnet,
daß auf der geglätteten Funktionsschicht (Spritzschicht 2) eine bezüglich der Funktionsschicht weichere, chemisch oder elektrolytisch abgeschiedene Deckschicht (5) als Einlaufschicht mit einer Dicke aufgebracht ist, die größer als die Rauhigkeit der Funktionsschicht ist, wobei die Poren der Funktionsschicht im oberflächennahen Bereich durch das Material der weicheren Deckschicht ausgefüllt sind.

2. Schichtwerkstoff nach Anspruch 1, dadurch gekennzeichnet, daß die weichere Deckschicht (5) aus einer PbSnCu- oder SnSbCu-Legierung besteht.

3. Schichtwerkstoff nach Anspruch 2, dadurch gekennzeichnet, daß die PbSnCu-Legierung folgende Zusammensetzung aufweist:
Pb 80 - 95 Gew.-%
Sn 4 - 15 Gew.-%
Cu 1 - 5 Gew.-%.

4. Schichtwerkstoff nach Anspruch 2, dadurch gekennzeichnet, daß die SnSbCu-Legierung folgende Zusammensetzung aufweist:
Sn 87 - 96 Gew.-%
Sb 3,5 - 10,5 Gew.-%
Cu 0,5 - 2,5 Gew.-%.

5. Schichtwerkstoff nach einem der Ansprüche 1 bis 4, dadurch gekennzeichnet, daß zwischen der Spritzschicht (2) und der Deckschicht (5) eine haftungsvermittelnde Zwischenschicht aus Nickel, Kupfer oder Nickel-Zinn aufgebracht ist.

6. Schichtwerkstoff nach einem der Ansprüche 1 bis 5, dadurch gekennzeichnet, daß die Spritzschicht (2) einen Anteil an Oxiden (4) von 5 - 10 Vol.-% und einen Anteil an Poren (3) von 2 - 5 Vol.-% aufweist.

7. Verfahren zur Herstellung von Schichtwerkstoffen für Gleitelemente in geschmierten tribologischen Systemen, mit einem metallischen Trägermaterial, insbesondere Stahl, auf das eine Funktionsschicht aus AlSn, AlPb, CuPb, CuSn oder CuZn, mittels eines an Luft durchgeführten Spritzverfahrens aufgebracht wird, dadurch gekennzeichnet,
daß die Spritzschicht zuerst einer Oberflächenbearbeitung durch Drehen oder Schleifen unterzogen wird,
und daß dann auf die gespritzte Funktionsschicht eine bezüglich der Funktionsschicht weichere Deckschicht mittels chemischer oder elektrolytischer Abscheidung aufgebracht wird.

8. Verfahren nach Anspruch 7, dadurch gekennzeichnet, daß vor dem Aufbringen der Deckschicht eine haftvermittelnde Zwischenschicht, aus Nickel, Kupfer oder Nickel-Zinn chemisch oder elektrolytisch aufgebracht wird.

9. Verfahren nach Anspruch 8, dadurch gekennzeichnet, daß die Zwischenschicht in einer Dicke von 1 - 2 µm aufgebracht wird.

## Claims

1. A laminate material for sliding elements in lubricated tribological systems, comprising a metal carrier layer, in particular of steel, and a functional layer of AlSn, AlPb, CuPb, CuSn or CuZn, which is applied by means of a spraying process carried out on air, characterised in that applied to the smoothed functional layer (spray layer 2) is a chemically or electrolytically deposited cover layer (5) which is softer in relation to the functional layer, as a running-in layer of a thickness which is greater than the roughness of the functional layer, wherein the pores of the functional layer in the region near the surface are filled by the material of the softer cover layer.

2. A laminate material according to claim 1 characterised in that the softer cover layer (5) comprises a PbSnCu- or SnSbCu-alloy.

3. A laminate material according to claim 2 characterised in that the PbSnCu-alloy is of the following composition:
Pb 80 - 95 % per weight
Sn 4 - 15 % by weight
Cu 1 - 5 % by weight.

4. A laminate material according to claim 2 characterised in that the SnSbCu-alloy is of the following composition:
Sn 87 - 96 % by weight
Sb 3.5 - 10.5 % by weight
Cu 0.5 - 2.5 % by weight.

5. A laminate material according to one of claims 1 to 4 characterised in that a bonding intermediate layer of nickel, copper or nickel-tin is applied between the spray layer (2) and the cover layer (5).

6. A laminate material according to one of claims 1 to 5 characterised in that the spray layer (2) has a proportion of oxides (4) of 5 - 10 % by volume and a proportion of pores (3) of 2 - 5 % by volume.

7. A process for the production of laminate materials for sliding elements in lubricated tribological systems, comprising a metal carrier material, in particular steel, to which a functional layer of AlSn, AlPb, CuPb, CuSn or CuZn is applied by means of a spray process carried out on air, characterised in that
the spray layer is firstly subjected to a surface processing operation by turning or grinding, and
then a cover layer which is softer in relation to the functional layer is applied by means of chemical or electrolytic deposition to the sprayed functional layer.

8. A process according to claim 7 characterised in that prior to the application of the cover layer a bonding intermediate layer of nickel, copper or nickel-tin is chemically or electrolytically applied.

9. A process according to claim 8 characterised in that the intermediate layer is applied in a thickness of 1 - 2 µm.

## Revendications

1. Matériau stratifié utilisé pour des éléments de glissement dans des systèmes tribologiques lubrifiés, comprenant une couche de support métallique, particulièrement composée d'acier, et une couche fonctionnelle en AlSn, AlPb, CuPb, CuSn ou CuZn, qui est appliquée au moyen d'un procédé par projection réalisé à l'air, caractérisé en ce que,
sur la couche fonctionnelle polie (couche projetée 2) est appliquée une couche de recouvrement(5) plus douce par rapport à la couche fonctionnelle, appliquée par voie chimique ou électrolytique, en tant que couche de rodage présentant une épaisseur qui est supérieure à la rugosité de la couche fonctionnelle, les pores de la couche fonctionnelle se trouvant remplis dans la zone proche de la surface par le matériau de la couche de recouvrement plus douce.

2. Matériau stratifié selon la revendication 1, caractérisé en ce que la couche de recouvrement plus douce (5) se compose d'un alliage de PbSnCu ou de SnSbCu.

3. Matériau stratifié selon la revendication 2, caractérisé en ce que l'alliage de PbSnCu présente la composition suivante :
Pb 80 à 95 % en masse
Sn 4 à 15 % en masse
Cu 1 à 5 % en masse.

4. Matériau stratifié selon la revendication 2, caractérisé en ce que l'alliage de SnSbCu présente la composition suivante :
Sn 87 à 96 % en masse
Sb 3,5 à 10,5 % en masse
Cu 0,5 à 2,5 % en masse.

5. Matériau stratifié selon l'une des revendications 1 à 4, caractérisé en ce que, entre la couche projetée (2) et la couche de recouvrement (5) est appliquée une couche intermédiaire de nickel, de cuivre ou de nickel-zinc conférant un pouvoir adhésif.

6. Matériau stratifié selon l'une des revendications 1 à 5, caractérisé en ce que la couche projetée (2) présente une fraction d'oxydes (4) comprise entre 5 et 10 % en volume, et une fraction de pores (3) comprise entre 2 et 5 % en volume.

7. Procédé de fabrication de matériaux stratifiés pour des éléments de glissement dans des systèmes tribologiques lubrifiés, comprenant une couche de support métallique, particulièrement composée d'acier, sur laquelle est appliquée une couche fonctionnelle en AlSn, AlPb, CuPb, CuSn ou CuZn, au moyen d'un procédé par projection réalisé à l'air, caractérisé en ce que
la couche projetée est d'abord soumise à un traitement de surface par tournage ou meulage,
puis en ce qu'est ensuite appliquée sur la couche fonctionnelle projetée une couche de recouvrement plus douce par rapport à la couche fonctionnelle, au moyen d'un dépôt chimique ou électrolytique.

8. Procédé selon la revendication 7, caractérisé en ce que, avant d'appliquer la couche de recouvrement, est appliquée, par voie chimique ou électrolytique, une couche intermédiaire de nickel, de cuivre ou de nickel-zinc conférant un pouvoir adhésif.

9. Procédé selon la revendication 8, caractérisé en ce que la couche intermédiaire est appliquée sur une épaisseur comprise entre 1 et 2 µm.
